# EUROPEAN PATENT SPECIFICATION

(11) **EP 4 509 577 B1**
(45) Date of publication and mention of the grant of the patent: **14.01.2026**
(21) Application number: 23209168.6
(22) Date of filing: 10.11.2023
(51) Int. Cl.: C09K 5/10, H01M 10/613, H01M 10/6567

(54) **SILICONE OIL-BASED IMMERSION COOLANT FOR ELECTRONIC COMPONENTS**
IMMERSIONSKÜHLMITTEL AUF SILIKONÖLBASIS FÜR ELEKTRONISCHE BAUTEILE
AGENT DE REFROIDISSEMENT PAR IMMERSION À BASE D'HUILE DE SILICONE POUR COMPOSANTS ÉLECTRONIQUES

(30) Priority: 14.08.2023 CN 202311016073
(43) Date of publication of application: 19.02.2025
(73) Proprietor: CSG Power Generation (Guangdong) Energy Storage Technology Co., Ltd, 510635 Guangzhou Guangdong (CN)
(72) Inventor: LIU, Bangjin, Guangzhou (CN); WANG, Zhiqiang, Guangzhou (CN); DONG, Chao, Guangzhou (CN); WANG, Jin, Guangzhou (CN); ZHOU, Yueli, Guangzhou (CN); WU, Jiasheng, Guangzhou (CN); PENG, Cheng, Guangzhou (CN); ZHANG, Min, Guangzhou (CN); WU, Bin, Guangzhou (CN); WANG, Linwei, Guangzhou (CN); LIN, Qihua, Guangzhou (CN); ZHENG, Xiaodong, Guangzhou (CN); WENG, Zheng, Guangzhou (CN); ZHAO, Shaohua, Guangzhou (CN); ZOU, Lunsen, Guangzhou (CN); ZHONG, Guobin, Guangzhou (CN); YU, Fei, Guangzhou (CN); LUO, Jia, Guangzhou (CN); LIU, Xuan, Guangzhou (CN); XU, Kaiqi, Guangzhou (CN); WANG, Chao, Guangzhou (CN)
(74) Representative: Finetti, Claudia

(56) References cited:
- CN-A- 112 708 398
- CN-A- 115 160 578
- CN-A- 115 975 606
- US-B1- 9 936 606

## Description

### TECHNICAL FIELD

The present application relates to the technical field of liquid cooling of electronic components, and in particular to a silicone oil-based immersion coolant for an electronic component.

### BACKGROUND

Electronic components, as a general term for electronic elements and electronic devices, can include resistors, capacitors, inductors, semiconductor separation devices, electroacoustic devices, laser devices, optoelectronic devices, sensors, power supplies, integrated circuits, central processing units (CPUs), printed circuit boards, etc.

With the development of information technology (IT), heat dissipation of the electronic components such as CPUs, motherboards, memory sticks, hard drives, power supplies, printed circuit boards, etc. has become more and more important, especially for lithium-ion batteries. Currently, the lithium-ion batteries are used as a core component of energy storage systems. When internal excitation sources in a battery core induce a sharp temperature rise, a strong thermal runaway reaction may occur in the battery core, resulting in release of flammable and explosive gases, thereby causing serious consequences such as fires and explosions.

Compared with air cooling technology, liquid cooling technology, especially immersion liquid cooling technology, has the characteristics of large heat carrying capacity, low flow resistance, and high heat exchange efficiency, and therefore has been widely used in the heat dissipation technology of electronic components. Currently, the immersion coolant mainly includes insulating oils such as mineral oils and vegetable oils, or a combination of a fluorinated liquid and insulating oils. However, the insulating oil has relatively high viscosity and is easy to decompose, thereby having a risk of combustion under certain circumstances. Although the fluorinated liquid is commonly used in data centers due to its suitable dielectric constant and specific heat capacity, stability, safety, and good cooling effect, it is expensive and not suitable for use in large-scale energy storage. CN115160578A discloses a solid-solid phase change material for data center, a preparation method and a coolant thereof. CN112708398A discloses a coolant for cooling an integrated chip circuit board. US9936606B1 discloses a liquid immersion cooler. CN115975606A discloses a single-component insulation gel with ultrahigh heat-conduction and a preparation method thereof.

### SUMMARY

Based on the above, there is a need to provide a silicone oil-based immersion coolant for an electronic component to solve the problem of relatively high viscosity, easy decomposition, and not suitable for application in large-scale energy storage of the immersion coolant in related art.

The present application provides a silicone oil-based immersion coolant for an electronic component as defined in claim 1, including a low-viscosity silicone oil, a silicone oil diluent and a thermally conductive inorganic filler. Further aspects and embodiments are defined in the dependent claims. Aspects, embodiments, examples, and implementations of the present disclosure that do not fall within the scope of the appended claims do not form part of the invention and are merely provided for illustrative purposes.

The kinematic viscosity of the low-viscosity silicone oil is in a range from 5 × 10⁻⁶ m²·s⁻¹ (5 Centistoke (cSt)) to 5 × 10⁻⁵ m²·s⁻¹ (50 cSt). The thermally conductive inorganic filler is an insulating filler.

The silicone oil diluent is dichloromethane or trichloromethane.

Based on the mass of the immersion coolant, a mass percentage content of the low-viscosity silicone oil is in a range from 70% to 85%, a mass percentage content of the silicone oil diluent is in a range from 10% to 20%, and a mass percentage content of the thermally conductive inorganic filler is in a range from 5% to 10%.

In some embodiments of the present application, the low-viscosity silicone oil includes one or more of oligomeric dimethylsiloxane, oligomeric diethylsiloxane, or oligomeric methylphenylsiloxane.

In some embodiments of the present application, the thermally conductive inorganic filler includes at least one or more of boron nitride, aluminum nitride, silicon nitride, silicon oxide, aluminum oxide, zinc oxide, or magnesium oxide.

In some embodiments of the present application, the electronic component is a lithium-ion battery.

In some embodiments of the present application, the immersion coolant is prepared by mixing the low-viscosity silicone oil, the silicone oil diluent and the thermally conductive inorganic filler, and then stirring.

In some embodiments of the present application, a time period of the stirring is in a range from 2 hours to 5 hours.

The silicone oil-based immersion coolant for an electronic component achieves the following beneficial effects.

On the one hand, addition of a silicone oil diluent to the low-viscosity silicone oil can dilute the low-viscosity silicone oil and further decrease the viscosity thereof. As a result, the fluidity of the immersion coolant can be improved, thereby increasing the thermal conductivity and heat transfer performance of the immersion coolant. On the other hand, addition of a thermally conductive inorganic filler to the low-viscosity silicone oil can conduct the heat of the electronic component away timely under the flow of the immersion coolant, thereby increasing the cooling performance of the immersion coolant. In addition, without addition of a silicone oil diluent, addition of a thermally conductive inorganic filler to the low-viscosity silicone oil would increase the viscosity of the low-viscosity silicone oil; or without addition of a thermally conductive inorganic filler, addition of a silicone oil diluent to the low-viscosity silicone oil would improve the fluidity of the immersion coolant while reducing the thermal conductivity thereof. Based on the above, the thermally conductive inorganic filler, the low-viscosity silicone oil, and the silicone oil diluent are combined, which on the one hand, ensures the insulation performance of the immersion coolant, facilitating the oil-immersed liquid cooling of the electronic component by the immersion coolant; on the other hand, improves the thermal conductivity and heat transfer performance of the immersion coolant while ensuring the high fluidity of the immersion coolant. The immersion coolant of the present application has a low cost, and is easy to apply in large-scale energy storage. Therefore, the problems of relatively high viscosity, easy decomposition, and not suitable for application in large-scale energy storage of the immersion coolant in related art are solved.

### DETAILED DESCRIPTION

In order to make the purpose, features, and advantages of the present application more obvious and understandable, the specific embodiments of the present application are described in detail below. In the following description, various specific details are set forth in order to understand the present application thoroughly. However, the present application can also be implemented in many other manners other than those described here. Similar improvements can be made by those of skilled in the art without departing from the essence of the present application. Therefore, the present application is not limited by the specific embodiments disclosed below.

Unless otherwise specified in the context, throughout the specification and claims, the term "comprises", "comprising", "include", "including" or the like is construed to be open and inclusive, i.e., "including but not limited to". In the description of the specification, the terms "an embodiment", "some embodiments", "exemplary embodiments", "exemplarily", "some examples", etc., are intended to indicate that specific features, structures, materials, or characteristics associated with the embodiments or examples are included in at least one embodiment or example of the present application. The schematic representation of the terms does not necessarily refer to the same embodiment or example. Moreover, the specific features, structures, materials, or characteristics may be included in any one or more embodiments or examples in any appropriate manner.

"A and/or B" includes three solutions, i.e., A alone, B alone, and a combination of A and B.

In the present application, unless otherwise specified, "one or more" means one, or equal to or greater than two.

In the present application, "for example", "such as", "example", "as an example", etc. are used for descriptive purposes, and indicate that the technical solutions described later which are different from the foregoing technical solutions are associated in contents, but are not to define the foregoing technical solutions, and both of them should not be understood as a limitation to the protection scope of the present application. In the present application, unless otherwise specified, an element A, such as an element B, means that the element B is a non-limiting example of the element A, that is, the element A is not limited to the element B.

In the present application, "optionally", or "optional" means that it may be present or may be absent, that is any one of the two parallel solutions of "presence" or "absence". If "optionally" are present repeatedly in one technical solution, each "optional" is independent if there is no contradiction or mutual restriction relationship, unless otherwise specified.

In the present application, expressions such as "optionally including", "optionally containing", etc., refer to "containing" or "not containing". "Optional component X" means that the component X is present or absent or means that the component X is included or excluded.

In the present application, the terms "first", "second" and the like in "the first aspect", "the second aspect" and the like are used for descriptive purposes only and may not be interpreted as indicating or implying relative importance or quantity or implying the importance or quantity of the indicated technical features.

Unless otherwise defined, all technical and scientific terms used herein have the same meaning as those normally understood by those of ordinary skill in the art. The terms used herein in the specification of the present application are for the purpose of describing specific embodiments only and are not intended to limit the present application.

In the present application, the technical features described in open type include both closed-type technical solutions consisting of the listed features, and open-type technical solutions including the listed features.

Unless otherwise specified, when a numerical interval (i.e., a numerical range) is referred to herein, optional values within the numerical interval are deemed to be in a continuous distribution, and the numerical interval includes two numerical endpoints (i.e., a minimum value and a maximum value) as well as every value between the minimum value and the maximum value. Unless otherwise specified, when the numerical interval only refers to integers within the numerical interval, two endpoint integers of the numerical range as well as every integer between the two endpoints are included, and it is equivalent to directly enumerate each integer. When multiple numerical ranges are provided to describe the features or properties, these numerical ranges can be combined. In other words, unless otherwise specified, the numerical ranges disclosed herein are to be understood to include any or all sub-ranges subsumed therein. The "numeric interval" can broadly include numerical intervals of various types, such as percentage interval, proportion interval, ratio interval, etc.

In the present application, unless otherwise specified, a temperature parameter refers to not only a constant temperature treatment, but also a treatment within a certain temperature range. It is understood that the constant temperature treatment allows the temperature to fluctuate within the precision range under the control of an instrument.

In the present application, the term "room temperature" or "normal temperature" generally refers to a temperature in a range from 4°C to 35°C, such as 20°C±5°C. In some embodiments, "room temperature" or "normal temperature" refers to a temperature in a range from 10°C to 30°C. In some embodiments, "room temperature" or "normal temperature" refers to a temperature in a range from 20°C to 30°C.

In the present application, unless otherwise specified, a percentage concentration refers to a final concentration. The final concentration refers to a proportion of a component in a system containing the component added.

New energy power generation such as photovoltaic power and wind power will become the key development object of new energy in the future. However, the entire power system needs to be transformed to overcome the intermittency and fluctuation of the wind power or the photovoltaic power. New energy storage with lithium-ion batteries as a core component is an important equipment foundation and key supporting technology for building a new power system and promoting the green and low-carbon energy transformation, thereby becoming an important support for achieving the goal of "carbon peaking and carbon neutrality".

The core component of an electrochemical energy storage system is the lithium-ion batteries. When internal excitation sources in a battery core induce a sharp temperature rise, a strong thermal runaway reaction may occur in the battery core, resulting in release of flammable and explosive gases, thereby causing serious consequences such as fires and explosions. Operating temperature of the lithium-ion batteries can greatly affect their performances, safety and life cycle, ideally being in a range from 25°C to 35°C. Besides, temperature difference among modules in a battery pack should be less than 5°C. Thus, thermal management of the lithium-ion batteries is of great importance.

Temperature control technology, as a core technology of the thermal management in the electrochemical energy storage systems, is the key to maintaining a large-scale energy storage system to operate continually and safely. At present, the temperature control technology in the field of energy storage mainly includes air cooling and liquid cooling. The air-cooling system, which utilizes air as a heat dissipation medium, is characterized by a simple system, a low production cost, and easy installation, and therefore is mainly used in situations where batteries have a low energy density and a low charge and discharge rate. The liquid cooling technology, which uses a coolant having a density a thousand times denser than that of the air and a specific heat capacity four times higher than that of air as a cooling medium, is characterized by large heat carrying capacity, low flow resistance, and high heat exchange efficiency, and therefore is widely used in situations where battery packs are in a high energy density, a rapid charge and discharge rate, and greatly changed ambient temperature.

The liquid cooling technology mainly includes two categories, i.e., cold plate type liquid cooling and immersion type liquid cooling. For the cold plate type liquid cooling, it is widely used in the field of energy storage, and a coolant, mainly including deionized water, ethylene glycol aqueous solution, etc., is utilized to circulate in a liquid cooling pipeline to take away the heat. However, special attention should be paid to the problem of leakage or seepage of liquid during the circulation process. The immersion type liquid cooling, which uses insulating oils such as mineral oil and vegetable oil as a coolant, has been developed in recent years. The mineral oil is relatively cheap, colorless, non-toxic, and non-volatile, and therefore is an environment-friendly coolant. However, the mineral oil has relatively high viscosity and is easy to decompose, thereby having a risk of combustion under certain circumstances.

In addition, the immersion type liquid cooling is mainly used in the IT industry. The world's largest fully immersed liquid cooling for data center was deployed as early as 2017. Heat-generating electronic components, such as CPUs, motherboards, memory sticks, hard drives, etc., are directly immersed in a coolant which is insulating and chemically inert, so that the heat generated by the electronic components can be taken away timely by the circulating coolant. The commonly used coolant includes fluorinated liquid and mineral oil. The fluorinated liquid is commonly used in data centers due to its suitable dielectric constant and specific heat capacity, stability, safety, and good cooling effect. however, the fluorinated liquid is expensive and not suitable for use in large-scale energy storage.

The liquid cooling system can be highly integrated with the lithium-ion battery pack. The integration system can be easily installed on site, occupies a small area, without the problem of pipeline clogging caused by dust and moisture condensation. When signs of thermal runaway occur, the liquid cooling system can rely on the cooling medium which has a large flow to dissipate the heat of the battery pack, and redistribute the heat among the battery modules, thereby quickly preventing the thermal runaway from deterioration, and reducing the runaway risk of the energy storage batteries. In addition, it is found that liquid cooling leads to better uniformity, lower operating power consumption, lower risk of battery thermal runaway, and longer life cycle of the energy storage system. The liquid cooling technology can be applied to various energy storage situations such as photovoltaic energy storage, wind power energy storage, power grid energy storage, commercial energy storage, etc.

Currently, there is an urgent need to develop an immersion coolant that has a relatively low-viscosity, is not easy to decompose, and is suitable for application in large-scale energy storage.

Based on the above, in a first aspect, some embodiments of the present application provide a silicone oil-based immersion coolant for an electronic component, including a low-viscosity silicone oil, a silicone oil diluent and a thermally conductive inorganic filler. The kinematic viscosity of the low-viscosity silicone oil is in a range from 5 × 10⁻⁶ m²·s⁻¹ (5 cSt) to 5 × 10⁻⁵ m²·s⁻¹ (50 cSt). The thermally conductive inorganic filler is an insulating filler.

The silicone oil typically refers to linear polysiloxane products that remain a liquid state at room temperature, and is characterized by heat resistance, electrical insulation, weather resistance, hydrophobicity, physiological inertness, small surface tension, as well as a low viscosity-temperature coefficient, and high resistance to compression.

The kinematic viscosity of the silicone oil can be apparently distinguished by different fluidity, with different fluidity for different kinematic viscosity. As the kinematic viscosity of the silicone oil decreases, the fluidity of the silicone oil becomes higher, thereby reducing flow loss, and improving thermal conductivity and heat transfer effect.

In embodiments of the present application, the kinematic viscosity of the low-viscosity silicone oil is measured at a temperature of 25°C.

It can be understood that as the number of repeating units of silicon-oxygen bonds of the silicone oil increases, the molecular weight of the silicone oil is greater, and therefore the viscosity of the silicone oil is higher, and conversely, the viscosity is lower.

The silicone oil diluent, known as a silicone oil dissolving agent, is a type of solvent with strong dissolving ability of silicone oil, as the name implies. The silicone oil diluent can be characterized by a moderate volatilization rate, no residue after volatilization, low toxicity, small odor, stable physical and chemical properties, non-flammable, non-explosive, zero ODP value, and a low GWP value.

The silicone oil diluent is dichloromethane or trichloromethane. After addition of the silicone oil diluent, the viscosity of the low-viscosity silicone oil is further decreased, thereby further increasing the fluidity of the immersion coolant, and thus increasing the thermal conductivity and heat transfer performance of the immersion coolant.

The thermally conductive inorganic filler refers to an inorganic filler with thermal conductivity. The inorganic filler is an insulating filler, and thus the thermally conductive inorganic filler is an electrically insulating material. Therefore, addition of the thermally conductive inorganic filler to the low-viscosity silicone oil can maintain the insulation performance of the immersion coolant with the low-viscosity silicone oil as the base oil, facilitating the direct contact of the electronic component with the immersion coolant for heat conduction. Besides, the thermally conductive inorganic filler has good thermal conductivity and heat transfer performance, and can conduct the heat of the electronic component away timely through the circulation process, thereby improving the cooling effect of the immersion coolant.

According to the silicone oil-based immersion coolant for an electronic component provided in the embodiments of the present application, on the one hand, the low-viscosity silicone oil can be diluted by adding a silicone oil diluent to the low-viscosity silicone oil, further decreasing the viscosity thereof. As a result, the fluidity of the immersion coolant is improved, thereby increasing the thermal conductivity and heat transfer performance of the immersion coolant. On the other hand, addition of the thermally conductive inorganic filler to the low-viscosity silicone oil can conduct the heat of the electronic component away timely under the flow of the immersion coolant, thereby increasing the cooling performance of the immersion coolant. In addition, without addition of the silicone oil diluent, the addition of the thermally conductive inorganic filler to the low-viscosity silicone oil would increase the viscosity of the low-viscosity silicone oil. ; or without addition of the thermally conductive inorganic filler, addition of the silicone oil diluent to the low-viscosity silicone oil would reduce the thermal conductivity of the immersion coolant while improving the fluidity of the immersion coolant. Based on the above, the thermally conductive inorganic filler, the low-viscosity silicone oil, and the silicone oil diluent are combined, which on the one hand, ensures the insulation performance of the immersion coolant, facilitating the oil-immersed liquid cooling of the electronic component by the immersion coolant; on the other hand, improves the thermal conductivity and heat transfer performance of the immersion coolant while ensuring the high fluidity of the immersion coolant. The immersion coolant of the present application has a low cost, and is easy to apply in large-scale energy storage. Therefore, the problem of relatively high viscosity, easy decomposition, and not suitable for application in large-scale energy storage of the immersion coolant in related art can be solved.

In the embodiments, the kinematic viscosity of the low-viscosity silicone oil is defined within the above range, which can ensure the high thermal stability of the low-viscosity silicone oil, thereby increasing the fluidity of the immersion coolant while meeting the stability requirements for the immersion coolant.

In some embodiments, the low-viscosity silicone oil includes one or more of oligomeric dimethylsiloxane, oligomeric diethylsiloxane, or oligomeric methylphenylsiloxane.

Polydimethylsiloxane, as a hydrophobic silicone material, also known as dimethyl silicone oil, is characterized by nontoxicity, odorlessness, physiological inertness, good chemical stability, good electrical insulation, weather resistance and hydrophobicity, and high shear resistance, and thus can be used for a long time at a temperature in a range from -50°C to 200°C.

Polydiethylsiloxane, also known as diethyl silicone oil, has a backbone consisting of silicon atoms and oxygen atoms with ethyl side groups connected to silicon atoms. Compared to the dimethyl silicone oil, the diethyl silicone oil has similar properties, with slightly poor high-temperature resistance and oxidation resistance, and better low-temperature resistance and lubricity, and thus can be used for a long time at a temperature in a range from -70°C to 150°C.

Polymethylphenylsiloxane, also known as phenylmethyl silicone oil, has a backbone consisting of silicon atoms and oxygen atoms with side groups including methyl and phenyl groups connected to the backbone. As the content of phenyl groups increases, the density and refractive index of the phenylmethyl silicone oil increase. The phenylmethyl silicone oil with a low phenyl content has a solidifying point lower than -70°C, while the phenylmethyl silicone oil with a medium phenyl content or a high phenyl content has increased thermal stability and good radiation resistance.

In these embodiments, the low-viscosity silicone oils can be conveniently obtained, exhibit good performances, and can meet the use requirements of the immersion coolant.

In these embodiments, using the silicone oil diluent as described above can further effectively reduce the viscosity of the low-viscosity silicone oil. Besides, these silicone oil diluents have good thermal stability, and stable physical and chemical properties.

. The chlorine diluent dichloromethane or trichloromethane, which are non-flammable and have good dispersibility, can improve the fluidity and safety of the immersion coolant.

In some embodiments, the thermally conductive inorganic filler includes at least one or more of boron nitride, aluminum nitride, silicon nitride, silicon oxide, aluminum oxide, zinc oxide, or magnesium oxide.

In these embodiments, the thermally conductive inorganic filler has good thermal conductivity, and is convenient and easy to obtain.

In some embodiments, based on the mass of the immersion coolant, a mass percentage content of the low-viscosity silicone oil is in a range from 70% to 85%, a mass percentage content of the silicone oil diluent is in a range from 10% to 20%, and a mass percentage content of the thermally conductive inorganic filler is in a range from 5% to 10%.

In these embodiments, the mass percentage contents of the low-viscosity silicone oil, the silicone oil diluent, and the thermally conductive inorganic filler are defined in the above range, which can improve the thermal conductivity of the immersion coolant as much as possible, while ensuring good fluidity of the immersion coolant.

In some embodiments, the electronic component is a lithium-ion battery.

In these embodiments, the immersion coolant can be used in large-scale energy storage and can effectively cool the lithium-ion batteries.

In some embodiments, the immersion coolant is prepared by mixing the components to be contained in the immersion coolant, and then stirring.

In these embodiments, the low-viscosity silicone oil, the silicone oil diluent, and the thermally conductive inorganic filler of the immersion coolant can be uniformly mixed by mixing the components to be contained in the immersion coolant and then stirring, thereby improving the cooling uniformity of the immersion coolant.

In some embodiments, a time period of the stirring is in a range from 2 hours to 5 hours.

In these embodiments, it can be ensured that the components to be contained in the immersion coolant are uniformly mixed, thereby improving the cooling uniformity of the immersion coolant.

In a second aspect, some embodiments of the present application provide use of the immersion coolant as described in the first aspect in a liquid cooling system.

In some embodiments, the liquid cooling system can be integrated with a lithium-ion battery pack. The heat of the battery pack can be dissipated or the heat among the battery modules can be redistributed by contacting the battery pack or multiple battery modules with the immersion coolant in large flow by circulation.

In order to objectively evaluate the technical effects of the embodiments of the present application, the present application is illustrated in detail by the following examples.

In the following examples, all raw materials can be commercially available. The raw materials used in the following examples all have the same physical and chemical parameters or are prepared by the same method to ensure the reliability of the experiments.

### Example 1

The immersion coolant in Example 1 includes 90 wt.% of low-viscosity dimethyl silicone oil, and 10 wt.% of a silicone oil diluent. The kinematic viscosity of the low-viscosity dimethyl silicone oil was 2 × 10⁻⁵ m²·s⁻¹ (20 cSt). Dichloromethane was used as the silicone oil diluent. The low-viscosity dimethyl silicone oil and dichloromethane were mixed at room temperature, and mechanically stirred for 2 hours to be uniform, thereby obtaining the immersion coolant.

### Example 2

The immersion coolant in Example 2 includes 80 wt.% of low-viscosity dimethyl silicone oil, and 20 wt.% of a silicone oil diluent. The kinematic viscosity of the low-viscosity dimethyl silicone oil was 2 × 10⁻⁵ m²·s⁻¹ (20 cSt). Dichloromethane was used as the silicone oil diluent. The low-viscosity dimethyl silicone oil and dichloromethane were mixed at room temperature, and mechanically stirred for 2 hours to be uniform, thereby obtaining the immersion coolant.

### Example 3

The immersion coolant in Example 3 includes 70 wt.% of low-viscosity dimethyl silicone oil, and 30 wt.% of a silicone oil diluent. The kinematic viscosity of the low-viscosity dimethyl silicone oil was 2 × 10⁻⁵ m²·s⁻¹ (20 cSt). Dichloromethane was used as the silicone oil diluent. The low-viscosity dimethyl silicone oil and dichloromethane were mixed at room temperature, and mechanically stirred for 2 hours to be uniform, thereby obtaining the immersion coolant.

### Example 4

The immersion coolant in Example 4 includes 85 wt.% of low-viscosity dimethyl silicone oil, 10 wt.% of a silicone oil diluent, and 5 wt.% of a thermally conductive inorganic filler. The kinematic viscosity of the low-viscosity dimethyl silicone oil was 2 × 10⁻⁵ m²·s⁻¹ (20 cSt). Dichloromethane was used as the silicone oil diluent. Boron nitride was used as the thermally conductive inorganic filler. The low-viscosity dimethyl silicone oil, dichloromethane, and boron nitride were mixed at room temperature, and mechanically stirred for 2 hours to be uniform, thereby obtaining the immersion coolant.

### Example 5

The immersion coolant in Example 5 includes 80 wt.% of low-viscosity dimethyl silicone oil, 10 wt.% of a silicone oil diluent, and 10 wt.% of a thermally conductive inorganic filler. The kinematic viscosity of the low-viscosity dimethyl silicone oil was 2 × 10⁻⁵ m²·s⁻¹ (20 cSt). Dichloromethane was used as the silicone oil diluent. Boron nitride was used as the thermally conductive inorganic filler. The low-viscosity dimethyl silicone oil, dichloromethane, and boron nitride were mixed at room temperature, and mechanically stirred for 2 hours to be uniform, thereby obtaining the immersion coolant.

### Example 6

The immersion coolant in Example 6 includes 70 wt.% of low-viscosity dimethyl silicone oil, 20 wt.% of a silicone oil diluent, and 10 wt.% of a thermally conductive inorganic filler. The kinematic viscosity of the low-viscosity dimethyl silicone oil was 2 × 10⁻⁵ m²·s⁻¹ (20 cSt). Dichloromethane was used as the silicone oil diluent. Boron nitride was used as the thermally conductive inorganic filler. The low-viscosity dimethyl silicone oil, dichloromethane, and boron nitride were mixed at room temperature, and mechanically stirred for 2 hours to be uniform, thereby obtaining the immersion coolant.

### Example 7

The immersion coolant in Example 7 includes 70 wt.% of low-viscosity dimethyl silicone oil, 20 wt.% of a silicone oil diluent, and 10 wt.% of a thermally conductive inorganic filler. The kinematic viscosity of the low-viscosity dimethyl silicone oil was 5 × 10⁻⁵ m²·s⁻¹ (50 cSt). Trichloromethane was used as the silicone oil diluent. Silicon nitride was used as the thermally conductive inorganic filler. The low-viscosity dimethyl silicone oil, trichloromethane, and silicon nitride were mixed at room temperature, and mechanically stirred for 2 hours to be uniform, thereby obtaining the immersion coolant.

### Example 8

The immersion coolant in Example 8 includes 80 wt.% of low-viscosity dimethyl silicone oil, 10 wt.% of a silicone oil diluent, and 10 wt.% of a thermally conductive inorganic filler. The kinematic viscosity of the low-viscosity dimethyl silicone oil was 2 × 10⁻⁵ m²·s⁻¹ (20 cSt). Dichloromethane was used as the silicone oil diluent. Boron nitride was used as the thermally conductive inorganic filler. The low-viscosity dimethyl silicone oil, dichloromethane, and boron nitride were mixed at room temperature, and mechanically stirred for 5 hours to be uniform, thereby obtaining the immersion coolant.

### Example 9

The immersion coolant in Example 9 includes 75 wt.% of low-viscosity dimethyl silicone oil, 17 wt.% of a silicone oil diluent, and 8 wt. % of a thermally conductive inorganic filler. The kinematic viscosity of the low-viscosity dimethyl silicone oil was 2 × 10⁻⁵ m²·s⁻¹ (20 cSt). Dichloromethane was used as the silicone oil diluent. Boron nitride was used as the thermally conductive inorganic filler. The low-viscosity dimethyl silicone oil, dichloromethane, and boron nitride were mixed at room temperature, and mechanically stirred for 5 hours to be uniform, thereby obtaining the immersion coolant.

The performances of the immersion coolants obtained in Examples 1 to 9 were tested.

The heat conductivity coefficient, as an index of the heat transfer performance, was tested according to ASTM D7896 (i.e., Standard test method for thermal conductivity, thermal diffusivity and volumetric heat capacity of engine coolants and related fluids by transient hot wire liquid thermal conductivity method). The electrical conductivity, as an index of the insulation performance, was tested according to GB/T 6682 (i.e., Analytical laboratory water - specifications and test methods). The kinetic viscosity was tested according to GB/T 265 (i.e., Petroleum products - Determination of kinematic viscosity and calculation of dynamic viscosity).

The test results are shown in Table 1 below.

**Table 1**

| Test Item | Kinetic viscosity 10⁻⁶ m²·s⁻¹ (cSt), (25°C) | Specific heat capacity kJ (kg·K) | Heat conductivity coefficient w (m·K) |
|---|---|---|---|
| Example 1 | 19.5 | 2.53 | 0.147 |
| Example 2 | 17.4 | 2.37 | 0.132 |
| Example 3 | 15.3 | 2.24 | 0.116 |
| Example 4 | 22.5 | 2.41 | 0.183 |
| Example 5 | 17.6 | 2.49 | 0.215 |
| Example 6 | 15.8 | 2.53 | 0.213 |
| Example 7 | 19.3 | 2.55 | 0.212 |
| Example 8 | 16.3 | 2.52 | 0.215 |
| Example 9 | 15.1 | 2.58 | 0.211 |

The following conclusions can be drawn from the above test results.
(1) By comparing Examples 1 to 3, it can be concluded that the thermal conductivity and the kinematic viscosity of the immersion coolant decrease with the increase of the mass percentage content of the silicone oil diluent, which indicates that the viscosity of the immersion coolant can be decreased by increasing the content of the silicone oil diluent, but the thermal conductivity of the immersion coolant can be enhanced by adding the thermally conductive inorganic filler.
(2) By comparing Examples 2 to 5, it can be concluded that addition of the thermally conductive inorganic filler can significantly increase the thermal conductivity of the immersion coolant, but would also increase the viscosity of the immersion coolant.
(3) By comparing Examples 3 to 9, it can be concluded that optimizing the relative contents of the silicone oil, the silicone oil diluent, and the thermally conductive inorganic filler can obtain the immersion coolant with appropriate viscosity and thermal conductivity.

In summary, the present application provides an immersion coolant with a low-viscosity silicone oil as a base oil. Addition of a silicone oil diluent to the low-viscosity silicone oil can further decrease the viscosity of the immersion coolant. However, as the content of the silicone oil diluent increases, the thermal conductivity of the immersion coolant is decreased. Addition of both the silicone oil diluent and the thermally conductive inorganic filler, each with an optimized amount, to the low-viscosity silicone oil can increase the thermal conductivity of the immersion coolant while decreasing the viscosity of the immersion coolant. Therefore, the immersion coolant, which has balanced production cost and liquid cooling effect, can be obtained, facilitating to apply in large-scale energy storage of the lithium-ion batteries.

## Claims

1. A silicone oil-based immersion coolant for an electronic component, comprising a low-viscosity silicone oil, a silicone oil diluent, and a thermally conductive inorganic filler,
wherein a kinematic viscosity of the low-viscosity silicone oil is in a range from 5 × 10⁻⁶ m²·s⁻¹ (5 cSt) to 5 × 10⁻⁵ m²·s⁻¹ (50 cSt),
the thermally conductive inorganic filler is an insulating filler,
the silicone oil diluent is dichloromethane or trichloromethane, and
based on the mass of the immersion coolant, a mass percentage content of the low-viscosity silicone oil is in a range from 70% to 85%, a mass percentage content of the silicone oil diluent is in a range from 10% to 20%, and a mass percentage content of the thermally conductive inorganic filler is in a range from 5% to 10%.

2. The immersion coolant according to claim 1, wherein the low-viscosity silicone oil comprises one or more of oligomeric dimethylsiloxane, oligomeric diethylsiloxane, or oligomeric methylphenylsiloxane.

3. The immersion coolant according to claim 1 or 2, wherein the thermally conductive inorganic filler comprises at least one or more of boron nitride, aluminum nitride, silicon nitride, silicon oxide, aluminum oxide, zinc oxide, or magnesium oxide.

4. The immersion coolant according to claim 1 or 2, wherein the electronic component is a lithium-ion battery.

5. The immersion coolant according to claim 1 or 2, wherein the immersion coolant is prepared by mixing the low-viscosity silicone oil, the silicone oil diluent, and the thermally conductive inorganic filler, and then stirring.

6. The immersion coolant according to claim 5, wherein a time period of the stirring is in a range from 2 hours to 5 hours.

## Patentansprüche

1. Immersionskühlmittel auf Silikonölbasis für ein elektronisches Bauteil, umfassend ein niedrigviskoses Silikonöl, ein Silikonölverdünnungsmittel und einen wärmeleitenden anorganischen Füllstoff,
wobei eine kinematische Viskosität des niedrigviskosen Silikonöls in einem Bereich von 5X10⁻⁶ m²·s⁻¹ (5 cSt) bis 5X10⁻⁵ m²·s⁻¹ (50 cSt) liegt,
der wärmeleitende anorganische Füllstoff ein isolierender Füllstoff ist,
das Silikonölverdünnungsmittel Dichlormethan oder Trichlormethan ist, und
basierend auf der Masse des Immersionskühlmittels liegt ein Massenanteil des niedrigviskosen Silikonöls in einem Bereich von 70 % bis 85 %, ein Massenanteil des Silikonölverdünnungsmittels in einem Bereich von 10 % bis 20 % und ein Massenanteil des wärmeleitenden anorganischen Füllstoffs in einem Bereich von 5 % bis 10 %.

2. Immersionskühlmittel nach Anspruch 1, wobei das niedrigviskose Silikonöl eines oder mehrere von oligomerem Dimethylsiloxan, oligomerem Diethylsiloxan oder oligomerem Methylphenylsiloxan umfasst.

3. Immersionskühlmittel nach Anspruch 1 oder 2, wobei der wärmeleitende anorganische Füllstoff mindestens eines oder mehrere von Bornitrid, Aluminiumnitrid, Siliziumnitrid, Siliziumoxid, Aluminiumoxid, Zinkoxid oder Magnesiumoxid umfasst.

4. Immersionskühlmittel nach Anspruch 1 oder 2, wobei das elektronische Bauteil eine Lithium-Ionen-Batterie ist.

5. Immersionskühlmittel nach Anspruch 1 oder 2, wobei das Immersionskühlmittel durch Mischen des niedrigviskosen Silikonöls, des Silikonölverdünnungsmittels und des wärmeleitenden anorganischen Füllstoffs und anschließendes Rühren hergestellt wird.

6. Immersionskühlmittel nach Anspruch 5, wobei ein Zeitraum des Rührens in einem Bereich von 2 Stunden bis 5 Stunden liegt.

## Revendications

1. Agent de refroidissement par immersion à base d'huile de silicone pour un composant électronique, comprenant une huile de silicone à faible viscosité, un diluant d'huile de silicone et une charge inorganique thermiquement conductrice,
dans lequel la viscosité cinématique de l'huile de silicone à faible viscosité est comprise dans une plage allant de 5 X 10⁻⁶ m²·s⁻¹ (5 cSt) à 5 X 10⁻⁵ m²·s⁻¹ (50 cSt),
la charge inorganique thermiquement conductrice est une charge isolante,
le diluant d'huile de silicone est le dichlorométhane ou le trichlorométhane, et
sur la base de la masse de l'agent de refroidissement par immersion, une teneur en pourcentage en masse de l'huile de silicone à faible viscosité est comprise entre 70 et 85 %, une teneur en pourcentage en masse du diluant à base d'huile de silicone est comprise entre 10 et 20 %, et une teneur en pourcentage en masse de la charge inorganique thermiquement conductrice est comprise entre 5 et 10 %.

2. Agent de refroidissement par immersion selon la revendication 1, dans lequel l'huile de silicone à faible viscosité comprend un ou plusieurs des composés suivants : diméthylsiloxane oligomère, diéthylsiloxane oligomère ou méthylphénylsiloxane oligomère.

3. Agent de refroidissement par immersion selon la revendication 1 ou 2, dans lequel la charge inorganique thermiquement conductrice comprend au moins un ou plusieurs des composés suivants : nitrure de bore, nitrure d'aluminium, nitrure de silicium, oxyde de silicium, oxyde d'aluminium, oxyde de zinc ou oxyde de magnésium.

4. Agent de refroidissement par immersion selon la revendication 1 ou 2, dans lequel le composant électronique est une batterie lithium-ion.

5. Agent de refroidissement par immersion selon la revendication 1 ou 2, dans lequel l'agent de refroidissement par immersion est préparé en mélangeant l'huile de silicone à faible viscosité, le diluant d'huile de silicone et la charge inorganique thermiquement conductrice, puis en agitant.

6. Agent de refroidissement par immersion selon la revendication 5, dans lequel la durée d'agitation est comprise entre 2 et 5 heures.
